# EUROPÄISCHE PATENTSCHRIFT

(11) **EP 2 419 606 B1**
(45) Veröffentlichungstag und Bekanntmachung des Hinweises auf die Patenterteilung: **15.05.2013**
(21) Anmeldenummer: 10700376.6
(22) Anmeldetag: 12.01.2010
(51) Int. Cl.: E21D 11/08, E21D 11/38

(54) **SCHUTZELEMENT, BETONELEMENT UND VERFAHREN ZUR HERSTELLUNG EINES BETONELEMENTS**
PROTECTIVE ELEMENT, CONCRETE ELEMENT, AND METHOD FOR PRODUCING A CONCRETE ELEMENT
ÉLÉMENT DE PROTECTION, ÉLÉMENT EN BÉTON ET PROCÉDÉ POUR FABRIQUER UN ÉLÉMENT EN BÉTON

(43) Veröffentlichungstag der Anmeldung: 22.02.2012
(73) Patentinhaber: Herrenknecht AG, 77963 Schwanau (DE)
(72) Erfinder: PETERS, Marc, 79108 Freiburg (DE)
(74) Vertreter: Wetzel, Philipp
(86) Internationale Anmeldenummer: PCT/EP2010/000102
(87) Internationale Veröffentlichungsnummer: WO 2011/085734

(56) Entgegenhaltungen:
- WO-A1-2005/024183
- DE-U1- 8 716 317
- JP-A- 6 288 194
- JP-A- 2002 322 899
- JP-A- 2004 132 002
- JP-A- 2005 083 074

## Beschreibung

Die Erfindung betrifft ein Schutzelement zum Verbinden mit einem Betonelement eines Tunnelausbaus, das einen Schutzabschnitt aufweist, der auf seiner Innenseite mit wenigstens einer Oberfläche des Betonelements verbindbar ist, wobei der Schutzabschnitt aus einem Kunststoff besteht, und der Schutzabschnitt an seiner Innenseite wenigstens ein Verbindungselement zum Herstellen erhalten in Verbindung mit dem Betonelement aufweist. Des Weiteren betrifft die Erfindung ein Betonelement zum Erstellen eines Tunnelausbaus mit einer konvexen äußeren Oberfläche und einer gegenüberliegenden inneren Oberfläche, wobei ein Schutzelement über wenigstens ein Verbindungselement mit der inneren Oberfläche verbunden ist, und ein Verfahren zur Herstellung eines solchen Betonelements.

Derartige Betonelemente bzw. Schutzelement sind aus WO 2005/024183 A1 bekannt. Solche Betonelemente werden in der Fachsprache auch als "Tübbing" bezeichnet und werden z. B. eingesetzt beim maschinellen Tunnelbau mittels Schildvortrieb. Dabei werden beispielsweise Tunnelbohrmaschinen eingesetzt, die einen Bohrkopf umfassen, hinter dem ein zylindrisches Schild mit einem Schildmantel und einem Schildschwanz angeordnet ist. Das Schild ist von einem kleineren äußeren Durchmesser als der Bohrkopf, so dass kein direkter Kontakt zwischen Tunnelwand und Schild besteht. Wenn die Tunnelbohrmaschine ein bestimmtes Stück vorangetrieben ist, werden im Schildschwanz die Betonelemente am Schildrand positioniert. Sie werden entgegen der Vortriebsrichtung an die benachbarten zuletzt angebrachten Betonelemente gepresst und mit diesen verbunden. Mehrere Betonelemente zusammen bilden einen Ring über den gesamten Umfang des Tunnels. Der Spalt zwischen Ring und Tunnelwand wird mit Mörtel gefüllt, z. B. um Setzungen vorzubeugen.

Dieser Art von Tunnelbau wird u. a. auch für den Bau von Abwasserleitungen eingesetzt, insbesondere von größeren Sammelleitungen. Dabei werden, wie bei anderen möglichen Einsatzzwecken auch, erhöhte Anforderungen an die Dichtigkeit der Verkleidung des Tunnels gestellt. Die Innenseite der Tübbinge wird mit einer Verkleidung abgedichtet, so dass kein Abwasser und keine aus dem Abwasser aufsteigenden Gase über die Tunnelwände in den Beton gelangen kann und diesen beschädigen können (Korrosion).

WO 2005/024183 A1 offenbart, dass die für den Tunnelausbau verwendeten Tübbings vorproduziert werden und dass bereits bei der Produktion der Tübbings eine Verkleidung auf der Innenseite angeordnet wird, durch die im zusammengesetzten Zustand der einzelnen Tübbingringe eine Abdichtung der Tunnelwand gegen Wasser und Gase erfolgt. Dabei ist auf dem Betonelement eine Schutzschicht vorgesehen, welche eine einer konvexen äußeren Oberfläche gegenüberliegende innere Oberfläche des Tübbings abdeckt. Diese Schutzschicht wird mittels mechanischer Verankerung fest im Beton verankert, so dass eine untrennbare Verbindung der Schutzschicht mit dem Beton entsteht. Die Schutzschicht ist dabei so ausgelegt, dass eine Seitenfläche des Betonelements teilweise ebenfalls mit eingeschlossen wird und anschließend daran eine Dichtung, die über der Schutzschicht hinaussteht, vorgesehen wird. Die Dichtung ist aus einem elastischen Material hergestellt, so dass bei Zusammensetzen der einzelnen Tübbings zum Tunnelausbau die Fugen zwischen den benachbarten Betonelementen durch die Dichtung verschlossen werden.

Das Betonelement selbst wird mittels einer Schalung hergestellt. In die Schalung wird eine Schutzschicht auf den Schalungsboden aufgelegt. Des Weiteren werden an die Seitenwände der Schalung ebenfalls Schutzschichtelemente gestellt. Des Weiteren weist die Schalung eine Aussparung auf, in die die Dichtung eingesetzt wird. Anschließend wird in Verbindung mit Bewehrung der Beton in die Schalung eingebracht. Nach Aushärten des Betons wird der Tübbing als Tunnelausbau eingesetzt.

JP 2004 132002 A offenbart ein weiteres Betonelement.

In der Praxis hat sich ergeben, dass im Übergang zwischen Schutzschicht und Dichtung immer dann Undichtigkeiten auftreten können, wenn die hinreichende Sorgfalt bei der Herstellung des Betonelements beim Einsetzen der Dichtung in die Schalung nicht aufgewendet wurde und/oder beim Anordnen der Dichtung in Bezug auf die Schutzschicht..

Aufgabe der Erfindung ist es daher, ein Herstellungsverfahren für ein Betonelement und eine verbesserte Schutzschicht bereit zu stellen, die mit einer höheren Zuverlässigkeit eine adequate Abdichtung der Betonelemente gegenüber Abwässern und Gasen bereit stellt und gleichzeitig ein einfaches Herstellungsverfahren, das gleichzeitig kostengünstiger ausfällt, bereit zu stellen.

Hinsichtlich des Schutzschichtelements wird die erfindungsgemäße Aufgabe dadurch gelöst, dass es sich bei dem verwendeten Kunststoff um einen spritzgussfähigen Kunststoff handelt, dass der Schutzabschnitt einstückig mit einer Dichtung verbunden ist, wobei die Verbindung gasdicht und flüssigkeitsdicht ist, dass die Schutzschicht einstückig mit dem Verbindungselement verbunden ist, dass die einstückige Verbindung durch Spritzgießen des Kunststoffes hergestellt ist.

Durch das einstückige Verbinden der Dichtung und der Verbindungselemente mit dem Schutzabschnitt wird auf besonders einfache Weise eine flüssigkeitsdichte und gasdichte Verbindung hergestellt. Durch das Spritzgießen kann gewährleistet werden, dass die Schutzelemente mit gleichbleibend hoher Qualität hergestellt werden, so dass in Bezug auf das fertige Betonelement die Schutzwirkung des Schutzelements besonders hoch und von gleichbleibend hoher Qualität, unabhängig vom Herstellungsprozess des Betonelements, ist. Das Schutzelement ist dabei so ausgeformt, dass, bezogen auf die Dichtung, eine zumindest auf drei Seiten vorgesehene Umschließung des Dichtungsmaterials mit dem Spritzgussmaterial vorgesehen ist. Da vorgesehen ist, dass das Schutzelement im Falle einer Beschädigung des Betonelements und damit evtl. von außen anstehendem Wasserdruck das Schutzelement vollständig in der Lage sein soll, den Wasserdruck zu halten, ist es des Weiteren besonders vorteilhaft, dass die Verbindungselemente in ihrer Form und in ihrer Materialwahl zur freien Verfügung stehen, und dass durch das Spritzgießen, insbesondere bei Findungselementen, die nicht aus Kunststoff bestehen, eine entsprechende Verbindung zwischen Verbindungselement und Schutzabschnitt bereit gestellt werden kann. Des Weiteren, für den Fall, dass die Verbindungselemente ebenfalls aus dem gleichen Kunststoff wie das Schutzelement hergestellt sind, kann, bedingt durch das Spritzgießen, eine besonders hohe Formenvielfalt für die Verbindungselemente bereitgestellt werden.

Die Erfindung sieht vor, dass der Schutzabschnitt einen Bodenabschnitt, bevorzugt einen Bodenabschnitt und einen Wandabschnitt aufweist. Auf diese Weise wird es möglich, eine besonders hohe Abdichtungswirkung des Schutzelements in Verbindung mit dem Betonelement zu erreichen. Eine weitere Lehre der Erfindung sieht in diesem Zusammenhang vor, dass des Weiteren auch ein Deckenelement vorgesehen ist, so dass ein Hohlkörper erzeugt wird, in den dann anschließend der Beton und ggf. bereits beim Spritzgießen Bewehrung eingebracht wird. Dieses ist insbesondere vorteilhaft, wenn das Betonelement auch auf seinen Außenseiten gegen aggressive Wässer im Gebirge geschützt werden muss.

Eine weitere Lehre der Erfindung sieht vor, dass es sich bei dem Verbindungselement um eine Wabenstruktur, einen Steg, einen Stift und/oder ein Flächenelement mit Öffnungen handelt. Insbesondere Flächenelemente, wie Wabenstrukturen oder Flächenabschnitte mit durchgehenden Öffnungen, erlauben eine besonders gute Verankerung des Schutzelements mit dem Betonelement über die gesamte Fläche des Schutzelements hinweg. Das zusätzliche Vorsehen von Stiften oder dgl., die ggf. weiter in den Beton des Betonelements hineinreichen, kann eine erhöhte punktuelle Haltekrafterhöhung erreicht werden.

Eine weitere Lehre der Erfindung sieht vor, dass es sich bei dem Kunststoff um ein Polydicyclopentadiene (pDCPD), bevorzugt in einer hochtemperaturfesten Form, oder ein Harz handelt, wobei dem Kunststoffharz ggf. Verstärkungselemente, wie beispielsweise Glasfasern, zugesetzt werden. Mit diesem Kunststoff lässt sich eine hohe Produktgeschwindigkeit aufgrund der schnellen Verarbeitungseigenschaften erreichen. Gleichzeitig ist eine besonders hohe Widerstandsfähigkeit im Einsatz gegeben.

Hinsichtlich des Betonelements zum Erstellen eines Tunnelausbaus sieht die Lehre der Erfindung vor, dass ein vorbeschriebenes Schutzelement verwendet wird. Durch ein solches Schutzelement wird es möglich, eine hinreichende Fugenabdichtung zu bewirken, die eine entsprechende Dichtigkeit der Schutzauskleidung des Tunnels gegenüber Flüssigkeiten und Gasen bereitstellt.

Hinsichtlich des erfindungsgemäßen Herstellungsverfahrens sieht die Lösung der Erfindung vor, dass ein zuvor beschriebenes Schutzelement aus einem Kunststoff im Spritzgussverfahren hergestellt wird, das fertige Schutzelement in eine Form eingesetzt wird, dass das Schutzelement mit Beton verbunden wird und nach dem Aushärten aus der Form entnommen wird. Durch die Vorfertigung des Schutzelements im Spritzgussverfahren, bei dem eine einstückige Verbindung zwischen Halteelementen und Dichtung mit dem Schutzabschnitt des Schutzelements erfolgt, wird ein einfaches Herstellungsverfahren bereit gestellt, weil die vorbeschriebenen evtl. Fehlerquellen bei der Herstellung des Betonelements eliminiert werden, da lediglich ein einzelnes Bauteil in die Schalung eingebracht werden muss, so dass die Fehlerquelle des Überganges Schutzschicht zu Dichtung eliminiert wird. Gleichzeitig wird auf einfache Weise eine Verbindung mit hoher Haltekraft zwischen Schutzelement und Betonelement bereit gestellt. Vorteilhaft dabei ist, dass auch bei einer vor Ort-Herstellung der Betonelemente am Einsatzort der Tübbings eine hinreichende qualitativ gleichbleibende Schutzwirkung für die Betonelemente bereit gestellt wird.

Es kann des Weiteren vorteilhaft sein, dass auch die Oberseite der Betonelemente mit einem Schutzelement oder einer Schutzschicht versehen wird. Dabei kann dieses Schutzelement oder die Schutzschicht bereits vor Zuführen des Betons in die Schalung oder auch erst danach, beispielsweise durch einen Anstrich oder dgl., bereit gestellt werden.

Nachfolgend wird die Erfindung an Hand von Zeichnungen näher erläutert.

Dabei zeigen:
- Fig. 1: eine räumliche, teilweise geschnittene Ansicht eines erfindungsgemäßen Schutzelements,
- Fig. 2: eine Schnittansicht eines erfindungsgemäßen Betonelements mit einem Schutzelement gemäß Fig. 1,
- Fig. 3: eine Schnittansicht eines erfindungsgemäßen Schutzelements,
- Fig. 4: eine Schnittansicht eines erfindungsgemäßen Schutzelements mit vorbereiteter Bewehrung,
- Fig. 5: eine Schnittansicht durch ein erfindungsgemäßes Betonelement,
- Fig. 6: ein vergrößerter Ausschnitt einer Schnittansicht eines Eckbereichs gemäß Fig. 5,
- Fig. 7: eine erste räumliche Ansicht eines erfindungsgemäßen Betonelements,
- Fig. 8: eine zweite räumliche Darstellung eines erfindungsgemäßen Betonelements, und
- Fig. 9: eine Seitenansicht eines erfindungsgemäßen Betonelements.

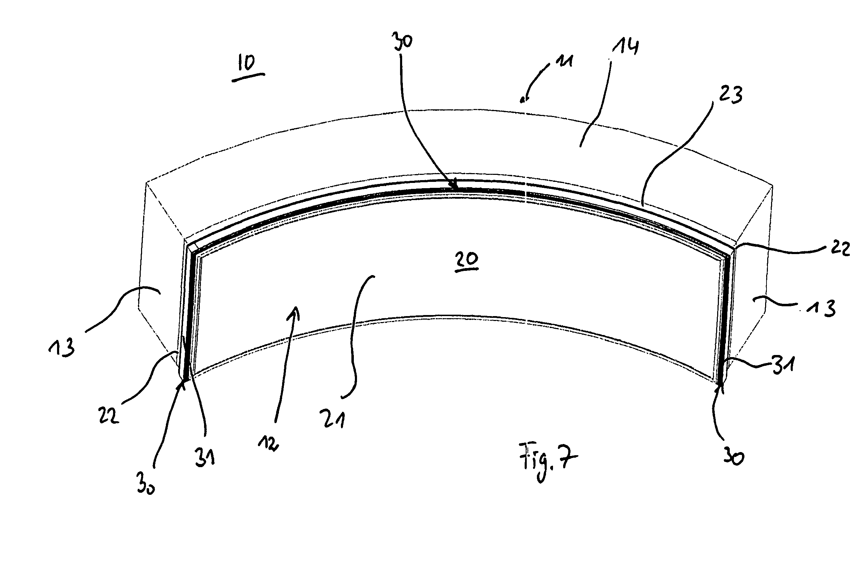

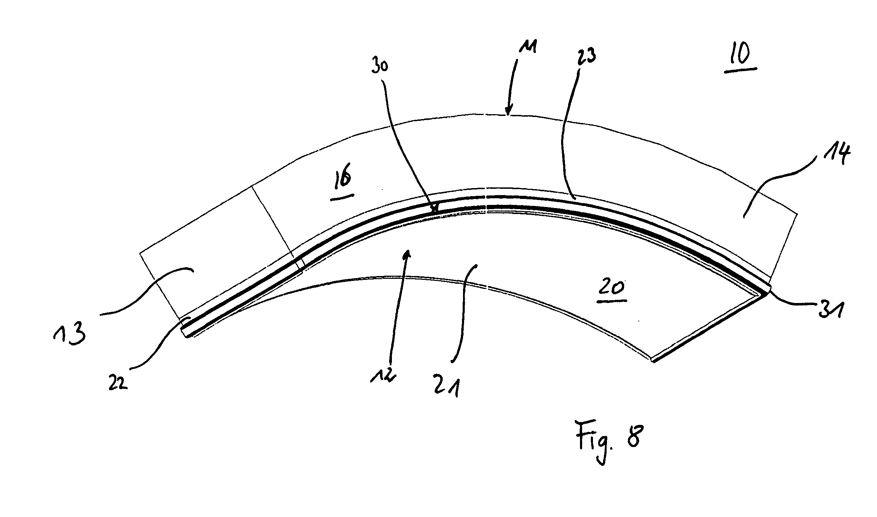

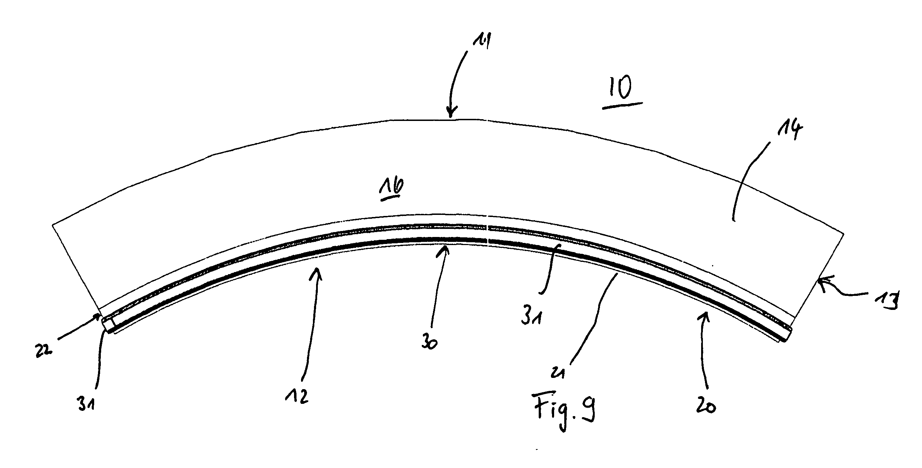

Bei einem erfindungsgemäßen Betonelement 10 (Fig. 7 bis Fig. 9) handelt es sich um einen Segmentabschnitt (Tübbing) eines Tunnelausbaus. Der Segmentabschnitt weist eine konvexe Oberseite 11 auf und eine dazu gegenüberliegend angeordnete Unterseite 12 (in Fig. 7 bis 9 verdeckt durch ein Schutzelement 20). An der Innenseite 12 des Betonelements ist das Schutzelement 20 angeordnet. Das Schutzelement 20 weist einen Bodenabschnitt 21 und Wandabschnitte 22, 23 auf. An diesen Wandabschnitten 22, 23 ist ein Aufnahmebereich 29 vorgesehen, in dem eine Dichtung 30 angeordnet ist. Die Verbindung zwischen Dichtung 30 und Schutzelement 20 erfolgt durch Spritzgießen.

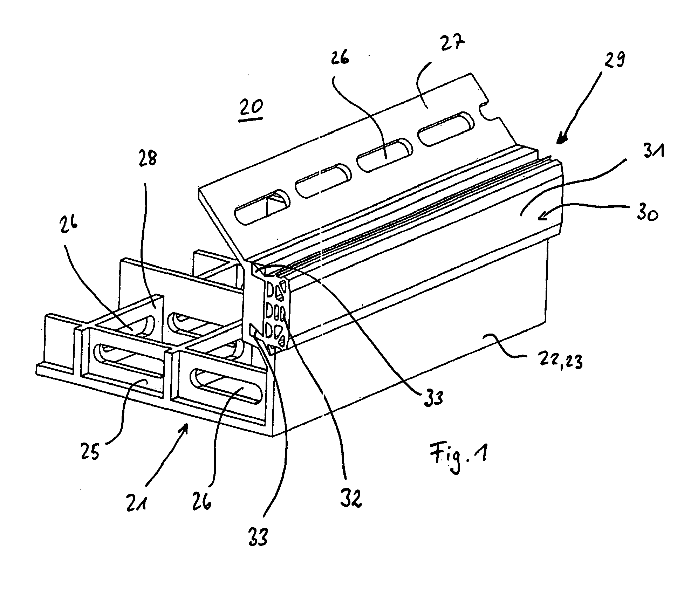

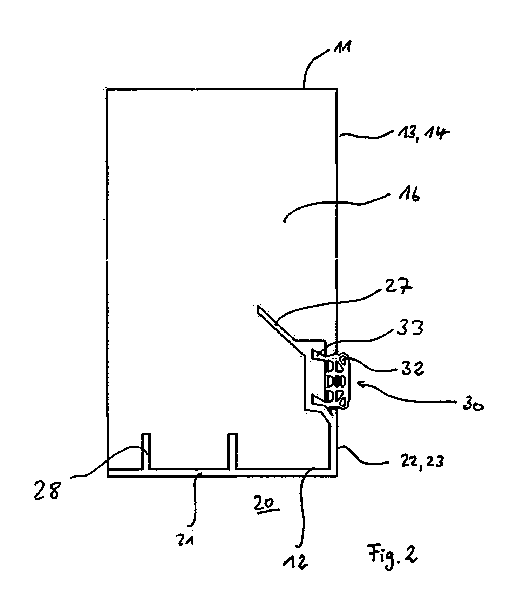

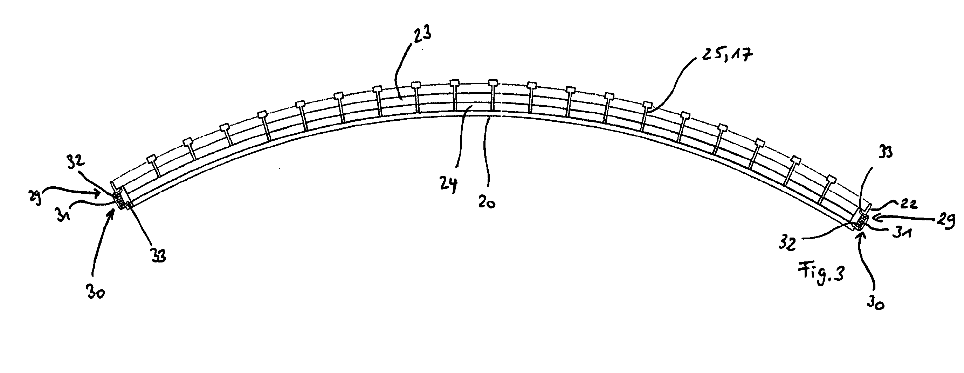

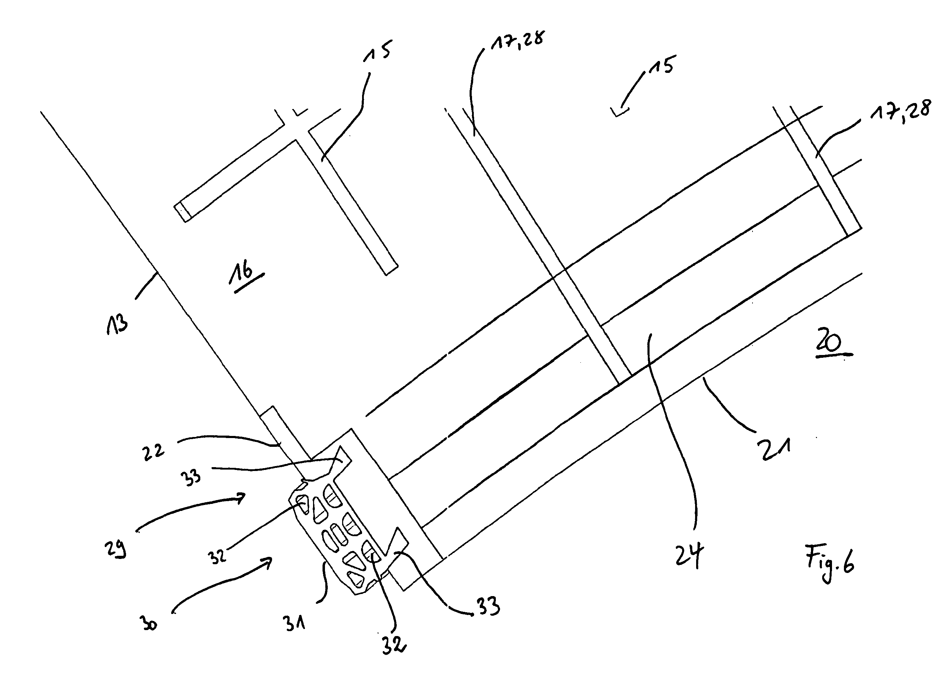

Eine erste Ausführungsform des erfindungsgemäßen Schutzelements 20 ist in den Fig. 1 und 2 dargestellt. Eine weitere Ausführungsform ist in den Fig. 3 bis 6 dargestellt.

Das Schutzelement 20 weist, wie in Fig. 1 dargestellt, einen Bodenabschnitt 21 auf, an dessen Außenseiten Wandabschnitte 22, 23 im Wesentlichen rechtwinklig, allerdings auch in beliebiger anderer Anordnung, angeordnet sind. Zur Herstellung einer haltenden Verbindung zwischen dem Schutzelement 20 und dem Betonelement 10 weist die Innenseite des Bodenabschnitts 21 Stege 25, 28 auf, wobei die Stege 25 parallel zur einen Außenwand und die Stege 28 parallel zur rechtwinklig dazu angeordneten Außenwand angeordnet sind. Die Stege 25, 28 sind mit Öffnungen 26 versehen, durch die der Beton 16 hindurchtreten kann und damit nach Aushärtung eine besonders gut haltende Verbindung erzeugt. Zur Bereitstellung einer haltenden Verbindung der Wandabschnitte 22, 23 ist ein Vorsprung 27 vorgesehen, der in einem Winkel von 45 - 90° an dem Wandabschnitt 22, 23 angreift und ebenfalls zum Herstellen einer haltenden Verbindung mit Öffnungen 26 versehen ist.

In einem Aufnahmebereich 29 ist die Dichtung 30 angeordnet. Die Dichtung 30 besteht aus einem elastischen Kunststoff. Die Dichtung 30 weist eine Dichtfläche 31 auf, die beim Zusammensetzen der einzelnen Betonelemente entweder auf eine andere Betonfläche oder eine andere Dichtfläche 31 einer Dichtung 30 trifft. Im Inneren weist die Dichtung 30 Kammern 32 auf. Beim Zusammensetzen der Betonelemente 10 wird der elastische Kunststoff der Dichtung 30 verformt und die Kammern 32 werden zusammengedrückt. Gegenüberliegend zur Dichtfläche 31 sind Haltevorsprünge 33 angeordnet, die in den Kunststoff der Seitenwand 22, 23 des Schutzelements 20 eingreifen. Diese und die naheliegenden Seitenwände der Dichtung 30 verbinden sich beim Spritzgießen mit dem Kunststoff des Schutzelements bzw. werden von diesem gasdicht umschlossen.

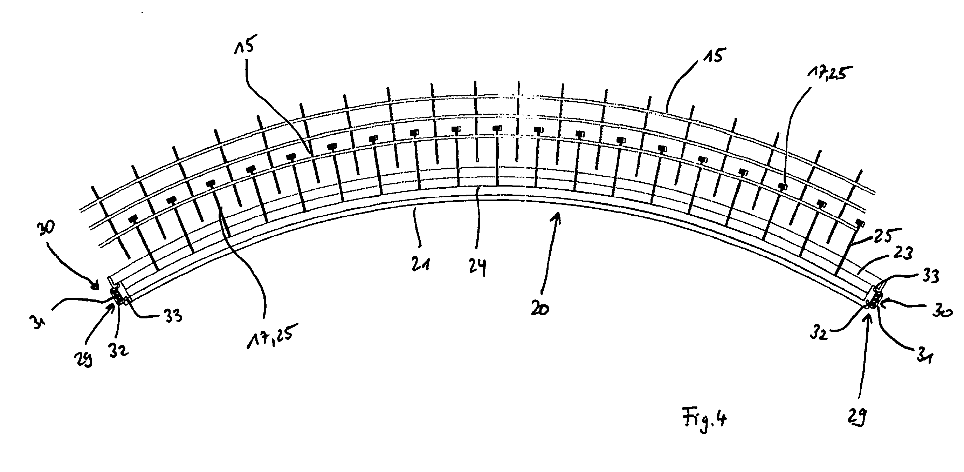

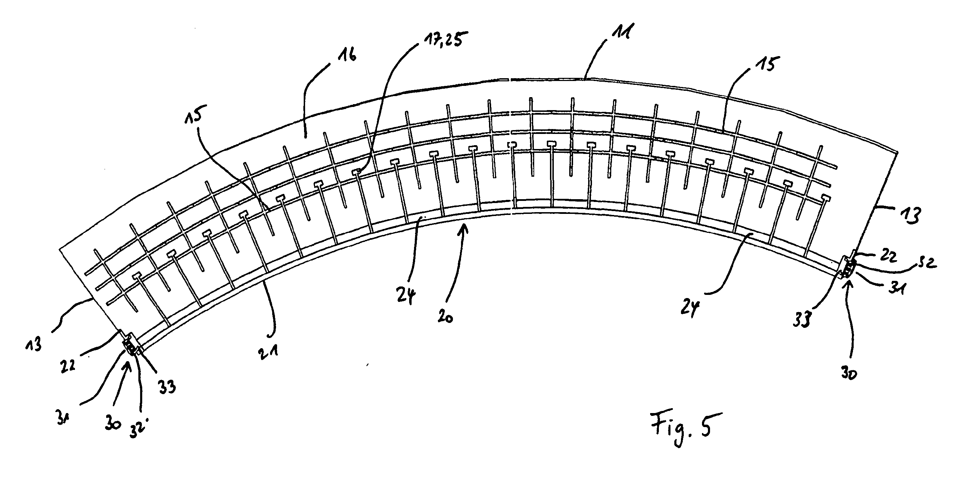

In der Ausführungsform des Schutzelements 20 gemäß Fig. 3 bis Fig. 6 ist auf der Innenseite des Bodenabschnitts 21 des Schutzelements 20 eine Wabenstruktur 24 angeordnet. Beim Einbringen des Betons 16 in das Schutzelement 20 kann Beton 16 in die Wabenstruktur 24 eindringen und dort aushärten. Durch die hohe Oberfläche der Wabenstruktur 24 liegt eine große Kontaktfläche zwischen Wabenstruktur 24 und Beton 16 vor, so dass nach Aushärten des Betons 16 hohe Haltekräfte vorliegen. Unterstützend zur Wabenstruktur 24 sind weitere Verbindungselemente vorgesehen, bei denen es sich ebenfalls um Stege 25, 28 oder um Stiftelemente 17 handelt. Es besteht die Möglichkeit, die Stege und/oder Stifte 17 aus dem Kunststoff des Schutzelements 20 zu formen oder alternativ bzw. ergänzend diese aus anderem Material, beispielsweise Metall, vorzusehen. Die Anordnung der Dichtung 30 in Bezug auf das Schutzelement 20 entspricht dem der Fig. 1 und 2. In Fig. 4 ist zusätzlich zu den Verbindungselementen in Form von Stiften 17 oder Stegen 25 eine Bewehrung 15 vorgesehen. Die Bewehrung liegt entweder, wie in Fig. 4 dargestellt, auf den Verbindungselementen 17, 25 auf oder kann alternativ auch auf der Wabenstruktur 24 oder dem Bodenabschnitt 21 aufliegen. Fig. 5 zeigt einen Schnitt durch ein erfindungsgemäßes Betonelement. Die Bewehrung 15 ist dabei genauso, wie die Wabenstruktur 24 und die Stege 25 bzw. Stifte 17, vom Beton 16 umschlossen.

Die Herstellung eines erfindungsgemäßen Betonelements 10 erfolgt dergestalt, dass eine Schalung vorgesehen wird, die die Form des späteren Betonelements aufweist. In Abhängigkeit der Form der einzelnen Tunnelausbauelemente 10 kann die äußere Form dabei ein Kreissegmentabschnitt sein. Die Draufsicht kann bspw. entweder rechteckig oder trapezoid ausgeführt sein. In diese Schalung wird ein vorbereitetes Schutzelement 20 eingesetzt, das bei ihrer Herstellung einstückig mit der Dichtung 30 verbunden wurde. Nach Einsetzen des Schutzelements 20 wird die Bewehrung 15 in die Schalung eingesetzt, und der Beton 16 wird eingegossen.

Alternativ kann das Schutzelement 20 so ausgeführt sein, dass es ein Hohlkörper ist, in den der Beton eingebracht wird, wodurch auf die Schalung verzichtet werden kann. Die Bewehrung 15 wird dann bereits bei der Herstellung des Hohlkörpers oder zusammen mit dem Beton (Faserbewehrung) in diesen eingebracht.

Die Herstellung des Schutzelements 20 erfolgt derart, dass eine Spritzgussform erstellt wird, die die Form des Schutzelements 20 wiedergibt. Anschließend wird in die Spritzgussform die Dichtung 30 an dem dafür vorgesehenen Aufnahmebereich 29 vorgesehen. Zusätzlich können Verbindungsmittel 17, 25, 28 und/oder Bewehrung 15 in die Spritzgussform eingebracht werden, sofern diese aus einem anderen Material als das Schutzelement selber hergestellt sein sollen. Anschließend wird der spritzgussfähige Kunststoff in die Spritzgussform eingebracht. Nach dem Aushärten des Kunststoffes kann das Schutzelement 20 aus der Form entnommen werden und zur Herstellung des Betonelements 10 bereitgestellt werden.

An den Seitenwänden 13 des Betonelements 10 sind Hohlräume (nicht dargestellt) angeordnet, in die Bügel (nicht dargestellt) eingesetzt werden, in denen Bolzen (nicht dargestellt) angeordnet werden, um die einzelnen Betonelemente 10 zu einem Ring miteinander zu verbinden. Die Dichtungen 30 der über die Bolzen miteinander verbundenen Betonelemente 10 stoßen aufeinander und sind zusammengepresst, so dass sie den Spalt bzw. die Fuge zwischen den beiden Betonelementen 10 vollständig abdichten. Beim Verkleiden eines Tunnels mit den erfindungsgemäßen Betonelementen 10 ist somit kein Abdichten der Fugen zwischen den Betonelementen 10 notwendig.

Des Weiteren sind Führungslöcher (nicht dargestellt) vorgesehen, in die Führungsstäbe (nicht dargestellt) eingesetzt werden können. Die Führungslöcher sind entweder in den Seitenwänden 14 der Betonelemente 10 oder als Halbelement in den Seitenwänden 13 vorgesehen. Beim Zusammensetzen zweier Betonelemente über die Bolzen bilden dann diese Halbsegmente das Führungsloch. Mit Hilfe der Führungsstäbe werden die Betonelemente 10 des nachfolgenden Ausbaurings des Tunnelausbaus auf einfache Weise exakt positionierbar, da diese Elemente ebenfalls die Führungslöcher aufweisen und die Führungslöcher dann in die Führungsstäbe eingeführt werden.

### Bezugszeichenliste

| | |
|---|---|
| 10 | Betonelement |
| 11 | Oberseite |
| 12 | Unterseite |
| 13 | Seitenwand |
| 14 | Seitenwand |
| 15 | Bewehrung |
| 16 | Beton |
| 17 | Stiftelement |
| 20 | Schutzelement |
| 21 | Bodenabschnitt |
| 22 | Wandabschnitt |
| 23 | Wandabschnitt |
| 24 | Wabenstruktur |
| 25 | Steg |
| 26 | Öffnung |
| 27 | Vorsprung |
| 28 | Steg |
| 29 | Aufnahmebereich |
| 30 | Dichtung |
| 31 | Dichtfläche |
| 32 | Kammer |
| 33 | Haltevorsprung |

## Patentansprüche

1. Schutzelement zum Verbinden mit einem Betonelement eines Tunnelausbaus, das einen Schutzabschnitt (21, 22, 23) aufweist, der auf seiner Innenseite mit wenigstens einer Oberfläche des Betonelements (10) verbindbar ist, wobei der Schutzabschnitt (21, 22, 23) aus einem Kunststoff besteht, und der Schutzabschnitt (21, 22, 23) an seiner Innenseite wenigstens ein Verbindungselement (24, 25, 26, 27, 28) zum Herstellen einer haltenden Verbindung mit dem Betonelement (10) aufweist, **dadurch gekennzeichnet, dass** der Schutzabschnitt (21, 22, 23) einen Bodenabschnitt (21) und einen Wandabschnitt (22, 23) aufweist, dass es sich bei dem Kunststoff um einen spritzgussfähigen Kunststoff handelt, dass der Schutzabschnitt (21, 22, 23) einstückig mit einer Dichtung (30) verbunden ist, wobei die Verbindung gasdicht und flüssigkeitsdicht ist, und dass der Schutzabschnitt (21, 22, 23) einstückig mit dem Verbindungselement (24, 25, 26, 27, 28) verbunden ist, wobei die einstückige Verbindung des Schutzabschnitts (21, 22, 23) mit der Dichtung (30) und mit dem Verbindungselement (22, 23, 24) durch Spritzgießen des Kunststoffs hergestellt ist.

2. Schutzelement nach Anspruch 1, **dadurch gekennzeichnet, dass** an wenigstens einer Seitenwand (22, 23) ein Vorsprung (27) vorgesehen ist, der bevorzugt in einem Winkel von 45 - 90° an dem Wandabschnitt angreift und bevorzugt zum Herstellen einer haltenden Verbindung mit Öffnungen (26) versehen ist.

3. Schutzelement nach Anspruch 1 oder 2, **dadurch gekennzeichnet, dass** es sich bei dem Verbindungselement um eine Wabenstruktur (24), einen Steg (25), einen Stift und/oder ein Flächenelement (25, 27, 28) mit Öffnungen (26) handelt.

4. Schutzelement nach einem der Ansprüche 1 bis 3, **dadurch gekennzeichnet, dass** es sich bei dem Kunststoff um einen Polydicyclopentadiene (pDCPD), bevorzugt hoch temperaturfest, oder ein Harz handelt, wobei bevorzugt Glasfasem eingebracht werden.

5. Betonelement zum Erstellen eines Tunnelausbaus mit einer konvexen äußeren Oberfläche (12) und einer gegenüberliegenden inneren Oberfläche (12), wobei ein Schutzelement (20) über wenigstens ein Verbindungselement (24, 25, 26, 27, 28) mit der inneren Oberfläche (12) verbunden ist, **dadurch gekennzeichnet, dass** das Schutzelement (20) ein nach einem der Ansprüche 1 bis 4 ist.

6. Verfahren zum Herstellen eines Betonelement nach Anspruch 5, bei dem ein Schutzelement (20) nach einem der Ansprüche 1 bis 4 aus Kunststoff im Spritzgussverfahren hergestellt wird, das fertige Schutzelement (20) in eine Form eingesetzt wird, das Schutzelement (20) mit Beton (16) verbunden wird und nach dem Aushärten zusammen mit dem fertigen Betonelement aus der Form entnommen wird.

## Claims

1. Protective element for connecting to a concrete element of a tunnel lining and having a protective portion (21, 22, 23) which can be connected, on its inner side, to at least one surface of the concrete element (10), wherein the protective portion (21, 22, 23) consists of a plastics material, and the protective portion (21, 22, 23) has, on its inner side, at least one connecting element (24, 25, 26, 27, 28) for producing a durable connection to the concrete element (10), **characterized in that** the protective portion (21, 22, 23) has a base portion (21) and a wall portion (22, 23), **in that** the plastics material is an injection-moldable plastics material, **in that** the protective portion (21, 22, 23) is connected in a single piece to a seal (30), wherein the connection is gas-tight and liquid-tight, and **in that** the protective portion (21, 22, 23) is connected in a single piece to the connecting element (24, 25, 26, 27, 28), wherein the single-piece connection of the protective portion (21, 22, 23) to the seal (30) and to the connecting element (22, 23, 24) is produced by injection molding of the plastics material.

2. Protective element according to Claim 1, **characterized by** the provision, on at least one side wall (22, 23), of a protrusion (27), which is positioned on the wall portion preferably at an angle of 45-90° and is preferably provided with openings (26) in order to produce a durable connection.

3. Protective element according to Claim 1 or 2, **characterized in that** the connecting element is a honeycomb structure (24), a crosspiece (25), a pin and/or a sheet-like element (25, 27, 28) with openings (26) .

4. Protective element according to one of Claims 1 to 3, **characterized in that** the plastics material is a polydicyclopentadiene (pDCPD), preferably resistant to high temperatures, or a resin, wherein preferably glass fibers are introduced.

5. Concrete element for producing a tunnel lining and having a convex outer surface (11) and an inner surface (12) located opposite, wherein a protective element (20) is connected to the inner surface (12) via at least one connecting element (24, 25, 26, 27, 28), **characterized in that** the protective element (20) is a protective element according to one of Claims 1 to 4.

6. Method for producing a concrete element according to Claim 5, in the case of which a protective element (20) according to one of Claims 1 to 4 is produced from plastics material by injection molding, the completed protective element (20) is inserted into a mold, and the protective element (20) is connected to concrete (16) and, once setting has taken place, is removed from the mold together with the completed concrete element.

## Revendications

1. Élément de protection destiné à être connecté à un élément en béton d'une construction de tunnel, qui présente une portion de protection (21, 22, 23), qui peut être connectée sur son côté intérieur à au moins une surface de l'élément en béton (10), la portion de protection (21, 22, 23) étant constituée d'un plastique, et la portion de protection (21, 22, 23) présentant, sur son côté intérieur, au moins un élément de connexion (24, 25, 26, 27, 28) pour établir une connexion de retenue avec l'élément en béton (10), **caractérisé en ce que** la portion de protection (21, 22, 23) présente une portion de fond (21) et une portion de paroi (22, 23), **en ce que** le plastique est un plastique pouvant être moulé par injection, **en ce que** la portion de protection (21, 22, 23) est connectée d'une seule pièce à un joint d'étanchéité (30), la connexion étant étanche aux gaz et aux liquides, et **en ce que** la portion de protection (21, 22, 23) est connectée d'une seule pièce à l'élément de connexion (24, 25, 26, 27, 28), la connexion d'une seule pièce de la portion de protection (21, 22, 23) au joint d'étanchéité (30) et à l'élément de connexion (22, 23, 24) étant réalisée par moulage par injection du plastique.

2. Élément de protection selon la revendication 1, **caractérisé en ce qu'**une saillie (27) est prévue sur au moins une paroi latérale (22, 23), ladite saillie venant en prise sur la portion de paroi de préférence avec un angle de 45 à 90°, et étant pourvue de préférence d'ouvertures (26) pour établir une connexion de retenue.

3. Élément de protection selon la revendication 1 ou 2, **caractérisé en ce que** l'élément de connexion est une structure en nid d'abeilles (24), une membrure (25), une branche et/ou un élément de surface (25, 27, 28) avec des ouvertures (26).

4. Élément de protection selon l'une quelconque des revendications 1 à 3, **caractérisé en ce que** le plastique est un polydicyclopentadiène (pDCPD), de préférence résistant aux hautes températures, ou une résine, des fibres de verre étant de préférence incorporées.

5. Élément en béton pour créer une construction de tunnel, avec une surface extérieure convexe (12) et une surface intérieure opposée (12), un élément de protection (20) étant connecté par le biais d'au moins un élément de connexion (24, 25, 26, 27, 28) à la surface intérieure (12), **caractérisé en ce que** l'élément de protection (20) est un élément de protection selon l'une quelconque des revendications 1 à 4.

6. Procédé de fabrication d'un élément en béton selon la revendication 5, dans lequel un élément de protection (20) selon l'une quelconque des revendications 1 à 4, est fabriqué en plastique dans un procédé de moulage par injection, l'élément de protection fini (20) étant inséré dans un moule, l'élément de protection (20) étant connecté à du béton (16) et, après le durcissement, étant retiré du moule conjointement avec l'élément en béton fini.
